# EUROPEAN PATENT APPLICATION

(11) **EP 4 640 063 A1**
(43) Date of publication of application: **29.10.2025**
(21) Application number: 24173011.8
(22) Date of filing: 29.04.2024
(51) Int. Cl.: A21C 9/08, A21C 14/00

(54) **DEVICE AND METHOD FOR PRODUCING AND/OR HANDLING DOUGH AND/OR DOUGH PRODUCTS**

(30) Priority: 26.04.2024 NL 2037560
(71) Applicant: Kaak Groep B.V., 7061 GA Terborg (NL)
(72) Inventor: VAN DER BORG, Lodewijk Stephanus Margaretha Joseph, 7061 GA TERBORG (NL); VAN DER LEEDEN, Menco, 7061 GA TERBORG (NL); VEROUDEN, Franciscus Quirinus Fredrik, 7061 GA TERBORG (NL)
(74) Representative: Peters, Sebastian Martinus

(57) **Abstract**

The invention relates to an apparatus comprising a housing and an internal mechanism for producing and/or handling dough and/or dough products, wherein said internal mechanism is arranged inside the housing. The housing comprises a light curtain that in use provides a virtual side wall of said housing, wherein the virtual side wall covers at least a part of the housing at which no side wall panel is provided and where at least part of the internal mechanism for producing and/or handling dough is visible from outside the housing. The light curtain comprises an emitter and a detector, wherein the emitter and the detector are mounted to or are integrally formed with a frame of the housing. The invention further relates to a method for producing and/or handling dough and/or dough products by using an apparatus as described above.

## Description

### BACKGROUND

The invention relates to a device for producing and/or handling dough, for the production of dough products such as bread, buns, etc..., and/or for producing and/or handling of dough products. In particular, the invention relates to a device for producing and/or handling dough, wherein at least part of the housing is replaced by an alternative enclosure.

In general, a housing is a container, a protective exterior or an enclosing structural panel, designed to, *inter alia,* maintain cleanliness of the contents and/or its surroundings by shielding dirt/dust, fouling and other contaminations, and/or protect interior mechanisms from potential physical, thermal, chemical, biological or radiational influences from the surrounding environment. In addition or alternatively, the housing may also protect the surrounding environment from potential physical, thermal, chemical, biological or radiational influences from the interior mechanisms or from dirt/dust, fouling and other contaminations produced by the process being executed inside the housing.

Usually, the external side of the housing is the only part of the apparatus which is visible from the outside of the apparatus, and as such the housing can obscure the design and/or working of the apparatus, for example to protect any trade secrets inside the apparatus. Furthermore, a housing may be designed not only for its utilitarian requirements, but also based on esthetic and commercial constraints, for example to make the apparatus more recognizable as an apparatus from a particular supplier.

In devices or assemblies of devices for producing and/or handling dough, flour is commonly provided as a thin layer on dough carrying panels, such as conveyor belts, in order to substantially prevent the dough from sticking to these carrying panels. However, this flour may also provide flour dust in or around the devices for producing and/or handling dough.

### SUMMARY OF THE INVENTION

A disadvantage of the known enclosing structural panels of a housing is, that any contaminants that are present in or around the device for producing and/or handling dough, may accumulate in or on the structural panels of the housing, which necessitates a regular stopping of the production process for dough products, in order to remove these accumulated contaminants from the structural panels of the housing.

A further disadvantage of the known enclosing structural panels of a housing is, that the internal mechanism and components of the apparatus are not readily accessible. For maintenance work it is usually necessary to first remove one or more of the enclosing structural panels to gain access to the internal mechanism and/or components.

It is an object of the present invention to provide a device for producing and/or handling dough, wherein maintenance can be shortened or can substantially made more easy.

According to a first aspect, the present invention pertains to an apparatus comprising a housing and an internal mechanism for producing and/or handling dough and/or dough products, wherein said internal mechanism is arranged inside the housing, wherein the housing comprises a light curtain that in use provides a virtual side wall of said housing, wherein the light curtain comprises an emitter and a detector, wherein the emitter and the detector are mounted to or are integrally formed with a frame of the housing, wherein the virtual side wall covers at least a part of the housing at which no side wall panel is provided and where at least part of the internal mechanism for producing and/or handling dough is visible from outside the housing.

The present invention goes against the common practice of providing an apparatus, in particular an apparatus for producing and/or handling dough, with a housing made from structural panels which obscures and protects the interior of the apparatus and/or protects the surrounding environment. The present invention provides a housing with a virtual side wall by means of a light curtain. Accordingly, at the side of the apparatus of the present invention with the virtual side wall and where substantially no structural side wall panel is provided, the interior of the apparatus is no longer obscured, and the interior of the apparatus and/or the external environment is/are no longer physically protected by a structural side wall panel of the housing. Accordingly, the virtual side wall provides easy access to the interior of the housing. This access can, for example, comprise visible access to check on the correct working of the apparatus of the invention during normal operation. Furthermore, this access can, for example, comprise physical access to the components of the apparatus during maintenance and/or repair. Because there is no structural side wall panel that needs to be removed at the position of the virtual side wall, any repair and/or maintenance of the components of the apparatus at or near the virtual side wall, can be shortened and can substantially made more easy.

In addition, due to the absence of a structural side wall panel at the side of the virtual side wall, accumulation of contaminants is substantially prevented.

In normal use of the apparatus for handling or producing dough and/or dough products of the invention, the virtual side wall as provided by the light curtain also provides a safety feature, in that the apparatus can enter into a safety-mode and/or shutdown when the light curtain detects that a body part touches the light curtain. Such a body part can be, but is not limited to, a part of a body of a person, such as an operator, or a part of an object or a tool handled by a person. Preferably, the sensitivity of the light curtain is such that it does not detect dust and/or flour suspended in the air around the apparatus of the invention.

It is noted that light curtains are commonly used as separate safety devices which are arranged at a suitable distance from a dough handling apparatus, as for example disclosed in CN210114002U. This Utility Patent also discloses an example where a light curtains is arranged on top of the housing of a dough mixing device, above and at the outside of a dough cylinder. However, this light curtain does not replace a structural side wall panel of the housing of the dough handling apparatus, are not an integral part of the housing of the dough processing apparatus, and do not solve any of the problems discussed above.

It is further noted that the side wall panel, usually comprises a structured side wall panel, which provides a physical barrier between the inside and the outside of the housing. The side wall panel may comprise a closed surface. Alternatively, the side wall panel may comprise a panel with an at least partially open structure, such as wire netting, a grated panel, a lattice barrier, or a perforated solid plate panel. Furthermore the side wall panel may be a fixed panel or, alternatively, may comprise a hinged panel or hinged door.

In an embodiment, the housing comprises one or more light curtains that in use provide multiple virtual side walls of said housing, wherein each virtual side wall of said multiple virtual side walls, covers at least a part of the housing at which no side wall panel is provided and where at least part of the internal mechanism for producing and/or handling dough is visible from outside the housing. The apparatus according to this embodiment can provide easy access at multiple sides of the housing.

In an embodiment said multiple virtual side walls completely surround said apparatus. In an embodiment, the housing only comprises the frame and one or more light curtains mounted to and/or integrally formed with the frame to provide said multiple virtual side walls. The apparatus according to this embodiment can provide easy access from all sides around the apparatus.

In an embodiment, said one or more light curtains comprises an emitter column and a corresponding detector column, wherein the emitter column and the corresponding detector column are arranged at opposite sides of the virtual side wall of said housing. The emitter column and detector column can be arranged to extend substantially vertically, one on the left side and the other one on the right side of the virtual side wall. Alternatively, the emitter column and detector column can be arranged to extend substantially horizontally, one on the upper side and the other one on the lower side of the virtual side wall.

In an embodiment, said one or more light curtains comprises a combined emitter and detector column and a mirror column, wherein the combined emitter and detector column and the mirror column are arranged at opposite sides of the virtual side wall of said housing. Light beams emitted by the emitters in the combined emitter and detector column are directed to the mirror column, and the mirror column reflects the light beams back to the combined emitter and detector column, where the light beams are detected by the detectors in the combined emitter and detector column. In this embodiment, only the combined emitter and detector column needs to be connected to a power supply and/or a controller, which makes the installation of the light curtain more easy. The mirror column is a `passive' component as it only needs to reflect light back to the combined emitter and detector column, substantially without modifying said light.

In an embodiment, said one or more light curtains comprises one or more further mirror columns, which are configured for in use reflecting light from the emitter at an angle larger than 0 degrees and smaller than 180 degrees, preferably at an angle of substantially 90 degrees. Accordingly, one light curtain can be used to cover two or more side walls of the housing. Accordingly, only one detector and one emitter, or one detector column and one emitter column, are needed to provide a virtual side wall to two or more side walls of the housing, in particular to two or more adjacent side walls of the housing. An advantage of this embodiment is that the apparatus needs less emitters and detectors to provide multiple virtual side walls.

It is noted that when the light curtain in the previous embodiment is touched, it can be difficult to establish at which one of the two or more virtual side walls the light curtain has been touched. In case it is important to know at which virtual side wall of the housing of the apparatus the light curtain is touched, it is advantageous to provide each one of said virtual side walls with its own detector and emitter pair to establish a light curtain for each individual virtual side wall of the housing of the apparatus.

It is further noted that in case the apparatus comprises a sensitive and/or hazardous component which should not be interfered with during normal use, the housing may be provided with a structural side wall part near said sensitive and/or hazardous component. Alternatively, the housing may be provided with a virtual side wall near said sensitive and/or hazardous component, which virtual side wall preferably comprises a dedicated light curtain to cover the side wall part near said sensitive and/or hazardous component. This dedicated light curtain is preferably directly connected to the sensitive and/or hazardous component in order to go into a safety-mode and/or shutdown when the dedicated light curtain is touched. Accordingly the sensitive and/or hazardous component can go into a safety mode and/or shutdown, without the intervention of or a signal from a controller.

In an embodiment, the virtual side wall or at least one of the multiple virtual side walls comprises a virtual through opening, wherein the virtual through opening is provided by a local interruption of the light curtain at a position in the housing of the apparatus where dough portion or dough products in use can move in and/or out of the housing. Preferably, the virtual through opening is configured such that, in use, dough portions or dough products can move in and/or out of the housing without touching and/or triggering the light curtain(s) adjacent to the virtual through opening.

In an embodiment, a part of the light curtain above the virtual through opening is arranged in the path of the dough portions, dough products, or carriers for said dough portions or dough products, which in use move in and/or out of the housing, wherein said part is configured to detect the presence of said dough portion, dough products, or carriers for said dough portions or dough products. Accordingly, the light curtain, in particular said part of the light curtain above the virtual through opening that is arranged in the path of the dough portions, dough products, or carriers for said dough portions or dough products, which in use move in and/or out of the housing, can be used for controlling the apparatus. For example, to check the proper functioning of the apparatus, or to count the number of dough portions, dough products, or carriers for said dough portions or dough products, that have passed into and/or out of the housing of the apparatus.

According to a second aspect, the present invention pertains to a method for producing and/or handling dough and/or dough products by using an apparatus, or an embodiment thereof, as described above.

In an embodiment wherein the apparatus comprises a virtual through opening and wherein a part of the light curtain above the virtual through opening that is in the path of the dough portions, dough products, or carriers for said dough portions or dough products, that in use move in and/or out of the housing, is configured to detect the presence of said dough portion, dough products and/or carrier for said dough portion or dough products, wherein the method comprises the step of:
detecting the presence of dough portions, dough products, or carriers for said dough portions or dough products, that move in and/or out of the housing.

In an embodiment, the method comprises the step of:
controlling the apparatus or a part of the apparatus to enter into a safety-mode and/or shutdown when a body or a body part touches the light curtain of the virtual side wall or at least one of the multiple virtual side walls, preferably at a position other than the part of the light curtain above the virtual through opening that is in the path of the dough portions, dough products, or carriers for said dough portions or dough products.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figure 1 schematically shows a dough forming apparatus according to the invention, and
Figures 2A and 2B schematically show a device for removing baked breads from their baking pans, wherein figure 2A shows the apparatus with at least partially structural side panels, and figure 2B shows the apparatus with virtual side walls according to the invention.

### DETAILED DESCRIPTION OF THE INVENTION

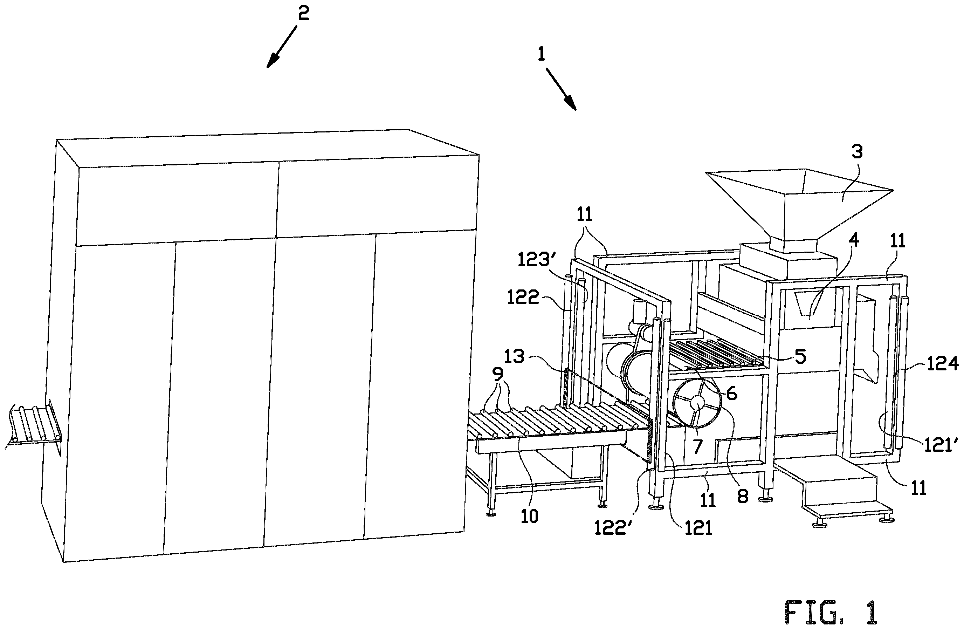

Figure 1 schematically shows part of a dough handling line for the manufacturing of baguettes, comprising a dough divider and rounder assembly 1, a proofer 2, etc.... The dough divider and rounder assembly 1 constitutes an example of an apparatus according to the present invention.

The dough divider and rounder assembly 1 comprises:
a hopper 3;
a divider 4 which receives dough from the hopper 3 and divides this dough in elongated dough portions 5 and places these elongated dough portions 5 onto a conveyor 6;
a rounding drum 7 which receives the elongated dough portions 5 from the conveyor 6, wherein the elongated dough portions 5 are molded between the rotating rounding drum 7 and a conveyor belt 8 at the back of the rounding drum 7, in order to mold the elongated dough portions 5 into elongated dough portions with a substantially circular cross-section 9, and places these onto a conveyor 10.

The housing of the dough divider and rounder assembly 1 comprises a frame 11. The internal mechanism for dividing and rounding the dough, in particular the divider 4 and the rounding drum 7, is arranged inside the frame 11 of the housing.

As schematically presented in figure 1, the frame 11 is on all sides provided with virtual side walls, wherein each virtual side walls is provided by an emitter column 121, 122, 124 and a detector column 121', 122', 123' (the fourth emitter column 123 and the fourth detector column 124' are arranged behind the divider 4, and therefore are not visible in figure 1). The emitter column 121, 122 and the corresponding detector column 121', 122' are arranged at opposite sides of the virtual side wall of the frame 11 of said housing.

As schematically shown in figure 1, the emitter columns 121, 122, 124 and detector columns 121', 122', 123' are fixedly mounted onto the frame 11 of the housing. In addition, the virtual side walls cover the side walls of the housing at which no side wall panel is provided and where at least part of the internal mechanism for dividing and/or rounding dough is visible from outside the housing.

The conveyor 10 which, in use, carries the rounded dough portions 9, runs through a virtual through opening 13. The virtual through opening 13 is provided by a local interruption of the light curtain, in particular a local interruption in the emitter column 122 and/or the detector column 122' at a position in the housing of the apparatus 1 where the rounded dough portions 9, in use, can move out of the housing.

It is noted that in the example of figure 1, both the top wall and the bottom wall of the housing are not provided with a structural wall panel and also not with a virtual side wall.

It is further noted that, contrarily to the dough divider and rounder assembly 1, the proofer 2 comprises a housing that is provided with side wall panels, in particular substantially closed side wall panels, substantially all around the proofer 2. Since the proofing process requires to keep the dough portions in a controlled environment inside the proofer 2, preferably regarding moisture and temperature, for a certain amount of time, this proofer 2 is an example of an apparatus that is not suitable for using virtual side walls according to the invention.

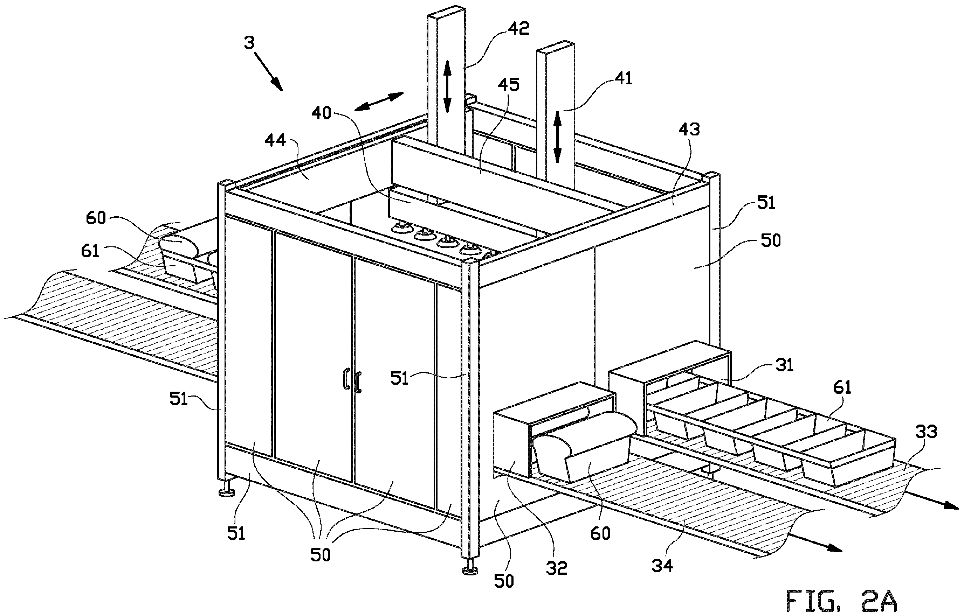

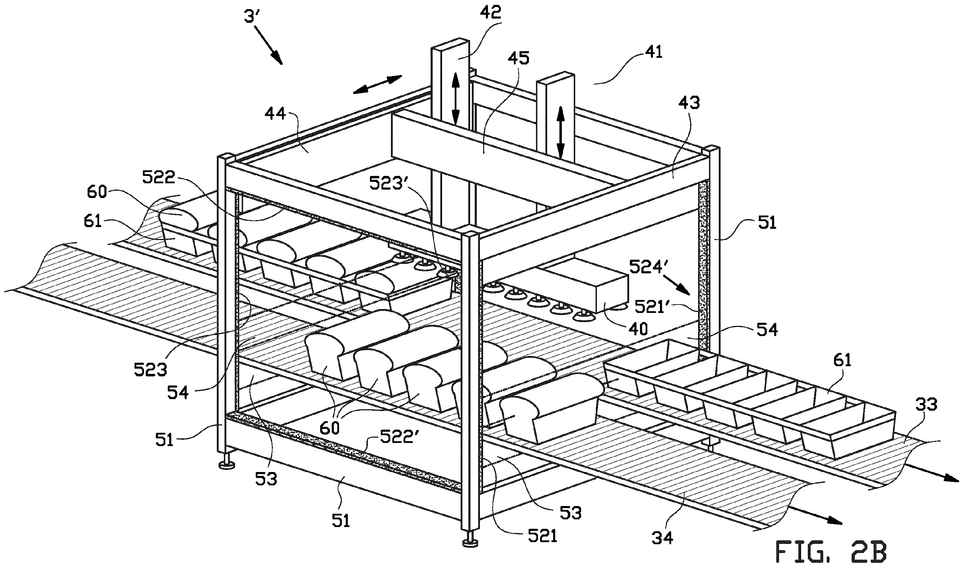

Figures 2A and 2B schematically show an apparatus 3 for removing baked breads from their baking pans. Such an apparatus is also referred to as a 'depanner' and is designed to remove baked dough products from the pan they are baked in and to place the products on a belt for transporting the baked products to a next working station, such as a cooling apparatus.

In the example shown in figure 2A, the apparatus 3 comprises two adjacent passage ways 31, 32 for two conveyors 33, 34. One of the two conveyors 33 is configured for transporting trays with baking pans 61 into the apparatus 3 and for removing the emptied trays with baking pans 61 pans out of the apparatus 3, while the other one 34 of the two conveyor is configured for transporting the baked dough products, in this example the baked breads 60 out of the apparatus 3 and towards a cooling apparatus, for example.

Internally, the apparatus 3 comprises a manipulator head 40 which is configured for picking up the baked breads 60 out of the baking pans 61 on the baking pan conveyor 33 and for placing the picked up breads 60 onto the adjacent conveyor 34. For this, the manipulator head 40 can be moved up and down in a substantially vertical direction along the vertical actuators 41, 42, which are mounted to a beam 45 which can be moved back and forth in a substantially horizontal direction along the horizontal actuators 43, 44. The horizontal direction is substantially perpendicular to the transport direction of both the conveyors 33, 34. The manipulator head 40 may for example be a suction head.

Figure 2A shows the apparatus 3 with a housing comprising side wall panels 50, which enclose the internal mechanism of the depanner.

Figure 2B shows the apparatus 3' with virtual side walls according to the invention. In this example, the housing comprises a frame 51. As schematically presented in figure 2B, the frame 51 is on all sides provided with virtual side walls, wherein each virtual side walls comprises a light curtain which is provided by a combined emitter and detector column 521, 522, 524 and a reflector column 521', 522', 523'. The combined emitter and detector column 521, 522, 523 and the corresponding reflector column 521', 522', 523' are arranged at opposite sides of the virtual side wall of said housing.

As schematically shown in figure 2B, the combined emitter and detector columns 521, 522, 523 are integrally formed with the frame 51 of the housing. In this example, the reflector columns 521', 522', 523' are preferably removably connected to the frame 51 in order to allow easy cleaning of the reflector columns.

The conveyors 33, 34 run through a virtual through openings 53. The virtual through openings 53 are provided by a local interruption of the light curtain, in particular a local interruption in at least the emitter part of the combined emitter and detector columns 521, 523 which provide the virtual side walls through which the conveyors 33, 34 pass through.

A part 54 of the light curtain above the virtual through opening 53 is configured to be in the path of the dough products and the carriers for said dough products, in particular in the path of the breads 60 and the baking pans 61, which, in use, move in and/or out of the housing. The part 54 of the light curtain is configured to detect the presence of said breads 60 and/or baking pans 61, and can be used for controlling the proper functioning of the apparatus 3'.

It is noted that the active components of the virtual side walls, in particular the combined emitter and detector columns 521, 522, 523 are all located on one side of the frame 51, which makes connecting the combined emitter and detector columns 521, 522, 523 to a power supply and/or controller, more easy.

It is further noted that in the example of figure 2B the reflector columns 521', 522', 523' are configured to reflect the light coming from the corresponding combined emitter and detector column 521, 522, 523, back to said corresponding combined emitter and detector column 521, 522, 523.

In the example of figure 2B, only three of the four sides of the housing are provided with virtual side walls.

In case the fourth side should also be provided with a virtual side wall, one of the reflector columns 523' adjacent to the fourth side can be replaced by a reflector column that reflects the light beams at an angle of substantially 90 degrees, such that the light beams travel substantially parallel to the plane of the fourth side, and on the part of the frame 51 opposite to said one of the reflector columns 523' an additional reflector column 524' is arranged which reflects the light back to the corresponding combined emitter and detector column 523 via said one of the reflector columns 523', for example.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In summary, the invention relates to an apparatus comprising a housing and an internal mechanism for producing and/or handling dough and/or dough products, wherein said internal mechanism is arranged inside the housing. The housing comprises a light curtain that in use provides a virtual side wall of said housing, wherein the virtual side wall covers at least a part of the housing at which no side wall panel is provided and where at least part of the internal mechanism for producing and/or handling dough is visible from outside the housing. The light curtain comprises an emitter and a detector, wherein the emitter and the detector are mounted to or are integrally formed with a frame of the housing. The invention further relates to a method for producing and/or handling dough and/or dough products by using an apparatus as described above.

## Claims

1. An apparatus comprising a housing and an internal mechanism for producing and/or handling dough and/or dough products, wherein said internal mechanism is arranged inside the housing, wherein the housing comprises a light curtain that in use provides a virtual side wall of said housing, wherein the light curtain comprises an emitter and a detector, wherein the emitter and the detector are mounted to or are integrally formed with a frame of the housing, wherein the virtual side wall covers at least a part of the housing at which no side wall panel is provided and where at least part of the internal mechanism for producing and/or handling dough is visible from outside the housing.

2. The apparatus according to claim 1, wherein the housing comprises one or more light curtains that in use provide multiple virtual side walls of said housing, wherein each virtual side wall of said multiple virtual side walls, covers at least a part of the housing at which no side wall panel is provided and where at least part of the internal mechanism for producing and/or handling dough is visible from outside the housing.

3. The apparatus according to claim 2, wherein said multiple virtual side walls completely surround said apparatus, preferably wherein the housing only comprises the frame and one or more light curtains mounted to and/or integrally formed with the frame to provide said multiple virtual side walls.

4. The apparatus according to claim 1, 2 or 3, wherein said one or more light curtains comprises an emitter column and a corresponding detector column, wherein the emitter column and the corresponding detector column are arranged at opposite sides of the virtual side wall of said housing.

5. The apparatus according to claim 1, 2 or 3, wherein said one or more light curtains comprises a combined emitter and detector column and a mirror column, wherein the combined emitter and detector column and the mirror column are arranged at opposite sides of the virtual side wall of said housing.

6. The apparatus according to claim 5, wherein said one or more light curtains comprises one or more further mirror columns, which are configured for in use reflecting light from the emitter at an angle larger than 0 degrees and smaller than 180 degrees, preferably at an angle of substantially 90 degrees.

7. The apparatus according to any one of the claims 1 - 6, wherein the virtual side wall or at least one of the multiple virtual side walls comprises a virtual through opening, wherein the virtual through opening is provided by a local interruption of the light curtain at a position in the housing of the apparatus where dough portions, dough products, or carriers for said dough portions or dough products, in use, can move in and/or out of the housing.

8. The apparatus according to claim 7, wherein a part of the light curtain above the virtual through opening that is in the path of the dough portions, dough products, or carriers for said dough portions or dough products, which, in use, move in and/or out of the housing, is configured to detect the presence of said dough portions, dough products, and/or carriers for said dough portions or dough products.

9. The apparatus according to claim 7 or 8, wherein the apparatus comprises a conveyor, wherein the conveyor is arranged to run through the virtual through opening.

10. A method for producing and/or handling dough and/or dough products by using an apparatus according to any one of the claims 1 - 9.

11. The method according to claim 10, when dependent on claim 8, wherein the method comprises the step of detecting the presence of dough portions, dough products, and/or carriers for said dough portions or dough products, that move in and/or out of the housing.

12. The method according to claim 10 or 11, wherein the method comprises the step of controlling the apparatus or a part of the apparatus to enter into a safety-mode and/or shutdown when a body or a body part touches the light curtain of the virtual side wall or at least one of the multiple virtual side walls, preferably at a position other than the part of the light curtain above the virtual through opening that is in the path of the dough portions, dough products, and/or carriers for said dough portions or dough products.
